Europäisches Patentamt

European Patent Office

Office européen des brevets

(11) Veröffentlichungsnummer: **0 233 587 B1**

# EUROPÄISCHE PATENTSCHRIFT

(45) Veröffentlichungstag der Patentschrift: **22.04.92**

(21) Anmeldenummer: **87101896.6**

(22) Anmeldetag: **11.02.87**

(51) Int. Cl.⁵: **B60K 17/20**, B60K 23/04

(54) **Verfahren zur Steuerung einer Differentialgetriebesperre im Antriebsstrang insbesondere geländegängiger Zugfahrzeuge.**

(30) Priorität: **19.02.86 DE 3605227**

(43) Veröffentlichungstag der Anmeldung:
**26.08.87 Patentblatt 87/35**

(45) Bekanntmachung des Hinweises auf die
Patenterteilung:
**22.04.92 Patentblatt 92/17**

(84) Benannte Vertragsstaaten:
**DE FR GB IT**

(56) Entgegenhaltungen:
**DE-A- 3 117 105**
**GB-A- 2 140 104**

(73) Patentinhaber: **Xaver Fendt & Co.**
**Johann-Georg-Fendt-Strasse 4**
**W-8952 Marktoberdorf(DE)**

Patentinhaber: **Sige Brevetti Ing. Colombo**
**S.p.A.**
**Via Trieste 26**
**Vimercate Colombo(IT)**

(72) Erfinder: **Santino, Pirotta**
**Via Campo dei Mori, 4**
**I-20069 Vaprio d'Adda (Mi)(IT)**
Erfinder: **Negele, Erwin**
**Schongauer-Str. 19**
**W-8929 Schwabsoien(DE)**
Erfinder: **Honzek, Robert**
**Kirchberg 4**
**W-8957 Oberthingau(DE)**
Erfinder: **Steuer, Michael**
**Mühlenstr. 32a**
**W-8954 Biessenhofen(DE)**
Erfinder: **Vock, Michael**
**Tegelbergweg 20**
**W-8952 Marktoberdorf(DE)**

EP 0 233 587 B1

**Beschreibung**

Die Erfindung betrifft ein Verfahren zur Steuerung einer Differentialgetriebesperre im Antriebsstrang insbesondere geländegängiger Zugfahrzeuge, wobei das Differentialgetriebe bei Erreichen bzw. Überschreiten eines vorgegebenen Grenzwertes des Relativschlupfes der über das Differentialgetriebe angetriebenen Räder gesperrt wird.

Eine derartige Steuerung ist beispielsweise in GB-A-2 140 104 offenbart.

Sperrbare Differentialgetriebe werden benutzt, um bei der Ausführung van schweren Zugarbeiten auf traktionsarmem bzw. - ungleichem Untergrund das Durchdrehen der Antriebsräder in Grenzen zu halten, damit weder die Reifen noch der Boden über Gebühr geschädigt wird. In der Regel wird das Differentialgetriebe gesperrt, wenn der momentane Radschlupf einen vorgegebenen zulässigen Wert übersteigt. Zur Ermittlung des momentanen Radschlupfes muß die wahre Fahrgeschwindigkeit des Fahrzeuges bekannt sein, wobei hierfür in der Praxis bei Fahrzeugen mit lediglich einer Antriebsachse die Drehzahl eines der nicht angetriebenen, im wesentlichen schlupflos mitlaufenden Räder verwendet wird. Bei allradgetriebenen Fahrzeugen wie z. B. landwirtschaftlichen Schleppern ist dieser Weg allerdings nicht beschreitbar und es werden daher bei solchen Scheppern zur Ermittlung der wahren Fahrgeschwindigkeit bereits Radar-, Ultraschall- oder dgl. Meßeinrichtungen eingesetzt.

Mit derartigen Meßeinrichtungen arbeitende Steuerungen für die Differentialgetriebesperre sind allerdings recht aufwendig und es wurde nach Wegen gesucht, wie ein übermäßiger Radschlupf verhindert werden kann, ohne auf die Kenntnis der wahren Fahrgeschwindigkeit angewiesen zu sein.

Ausgehend von der Annahme, daß eine ggfs. auftetende Drehzahldifferenz an den beiden angetriebenen Rädern einer Achse zumindest zum größeren Teil auf Radschlupf beruht, und das langsamer rotierende Rad einen nur geringen Radschlupf aufweist, existiert in diesem Zusammenhang ein bisher nicht veröffentlichtes Steuerungsverfahren der eingangs angegebenen Art (IT-Patentanmeldung 24540A/82), bei dem die Sperrung des Differentialgetriebes nach Erreichen bzw. Überschreiten eines vorgegebenen Grenzwertes des Relativschlupfes zweier Antriebsräder einer Achse erfolgt. Dabei ist der Grenzwert des Relativschlupfes vom Fahrer in Grenzen verstellbar, um die Arbeitsweise der Steuerung veränderlichen Einsatzbedingungen anpassen zu können, im übrigen bleibt der Grenzwert aber während des Einsatzes konstant. Damit unter keinen Umständen der zulässige Radschlupf regelmäßig überschritten wird, sollte der Grenzwert betragsmäßig niedriger als der von jeweils herrschenden Einsatzbedingungen abhängige zulässige Radschlupf eingestellt sein. Aus im Folgenden angegebenen Gründen ist dies jedoch oftmals nicht möglich.

Hinsichtlich ihrer Arbeitsweise ist die bekannte Steuerung bei schweren Zugarbeiten, wie z.B. Pflügen, nicht zu beanstanden. Ihr Einsatz zur Sperrung des Differentialgetriebes von gelenkten Rädern mit einem wesentlich von Null abweichenden Lenkrollradius ist jedoch noch problematisch. Es hat sich herausgestellt, daß die Sperre in solchen Fällen bei Fahrgeschwindigkeiten unterhalb des beim Pflügen benutzten Geschwindigkeitsbereiches auch ohne Auftreten eines Radschlupfes, allein aufgrund des Einschlagens der Räder einrücken kann. Wegen der damit verbundenen abrupten Änderung des Fahrverhaltens des Fahrzeuges können sowohl bei Teilnahme am öffentlichen Straßenverkehr als auch im Gelände gefährliche Situationen herbeigeführt werden. Zur Vermeidung daraus resultierender Gefährdungen des Fahrers als auch Dritter mußte der Grenzwert entsprechend höher gewählt werden.

Aufgabe der Erfindung ist es, das eingangs beschriebene Verfahren zur Steuerung einer Differentialgetriebesperre so zu verbessern, daß das Differentialgetriebe aufgrund eines Relativschlupfes, der aus Lenkeinschlägen der Räder bei niedrigen Geschwindigkeiten resultiert, nicht gesperrt wird. Dies soll insbesondere ohne Kenntnis des augenblicklichen Lenkeinschlagwinkels möglich sein. Andererseits soll aber sichergestellt sein, daß im Arbeitsbereich für schwere Zugarbeiten die Sperrung des Differentialgetriebes erst bei Radschlupfwerten der üblichen Größe erfolgt.

Zur Lösung dieser Aufgabe wird vorgeschlagen, daß der Grenzwert des Relativschlupfes in Abhängigkeit von der Fahrgeschwindigkeit bestimmt wird, wobei der Grenzwert in einem ersten, höhere Fahrgeschwindigkeiten erfassenden Geschwindigkeitsbereich niedrige Werte dagegen in einem zweiten, niedrigere Fahrgeschwindigkeiten erfassenden Geschwindigkeitsbereich höhere Werte aufweist.

Durch die Erfindung ist es möglich, den Zeitpunkt des Sperrens der Differentialsperre den Erfordernissen des jeweiligen Arbeitseinsatzes anzupassen. So kann durch geeigneten Verlauf des Grenzwertes über die Fahrgeschwindigkeit erreicht werden, daß das Sperren bei ganz unterschiedlichen, vorgegebenen Grenzwerten des Relativschlupfes der Räder erfolgt. Dadurch ist sichergestellt, daß einerseits das Differentialgetriebe bei schweren Zugarbeiten bereits bei relativ geringem Relativschlupf sperrt, andererseits aber das Sperren bei sehr geringen Fahrgeschwindigkeiten, bei welchen sich anläßlich eines Lenkradeinschlages ein relativ großer Lenkrollradius der Räder störend bemerkbar macht, erst relativ spät stattfindet.

Weitere vorteilhafte Einzelheiten und Merkmale der Erfindung gehen aus den übrigen Ansprüchen hervor. Es zeigt:

Fig. 1 eine antreibbare Lenkachse eines Fahrzeuges mit der erfindungsgemäßen Steuerung und

Fig. 2 ein Diagramm, in welchem der Grenzwert des Relativschlupfes über die Fahrgeschwindigkeit des Fahrzeuges aufgetragen ist.

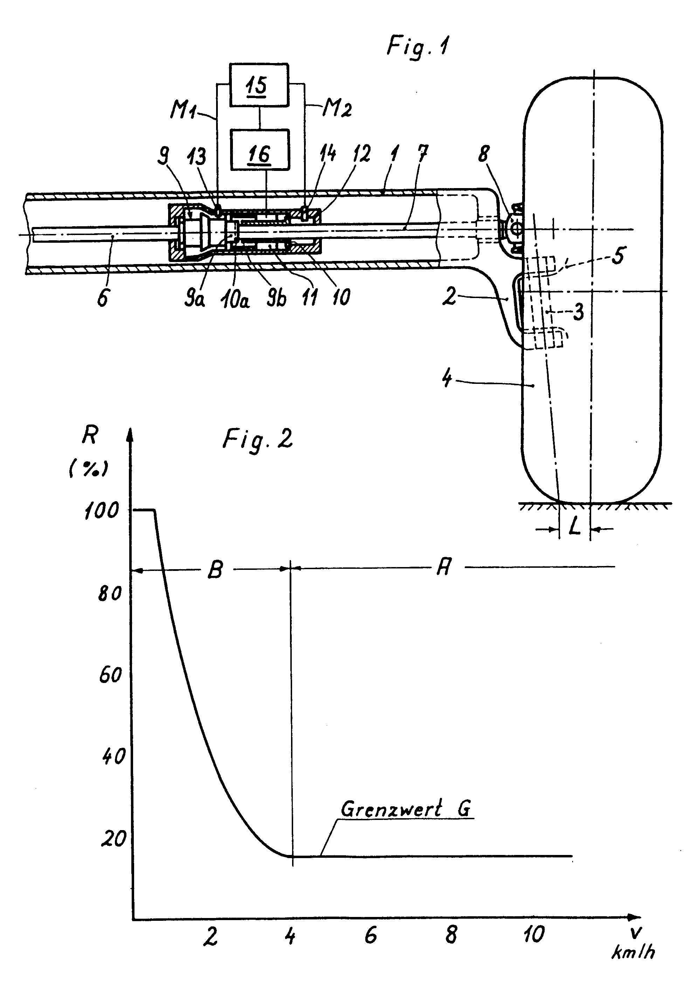

Die in Fig. 1 gezeigte Lenkachse ist als Portalschse ausgebildet, und besteht im wesentlichen aus einem hohlen Achskörper 1, der in seinen Endbereichen ein tiefergesetztes Gabellager 2 aufweist. In diesem ist ein Lenkzapfen 3 eingesetzt, un den ein mit dem antreibbaren Vorderrad 4 verschraubtes, mit 5 angedeutetes Radnabengehäuse drehbar ist. Die Verlängerung des Lenkzapfens 3 bildet mit der Senkrechten einen Spreizwinkel und trifft im Abstand L, dem Lenkrollradius, von der Mittelebene des Rades 4 auf die Bodenaufstandsfläche.

Der Antrieb der Räder 4 erfolgt über Achswellen 6,7, die von einem im Achskörper 1 untergebrachten sperrbaren Differentialgetriebe ausgehen und oberhalb des Gabellagers 2 unter Einschaltung eines Wellengelenkes 8 in das Radnabengehäuse 5 eingeführt sind.

Das sperrbare Differentialgetriebe besteht aus dem eigentlichen Differentialgetriebe 9 selbst, sowie einem drehfest aber axial verschiebbar auf der Achswelle 7 sitzenden Sperrglied 10, das unter der Kraft einer nicht gezeigten Feder in der gezeigten Entsperrstellung gehalten ist. Zum Überführen des Sperrgliedes 10 in seine Sperrstellung ist ein Magnet 11 vorgesehen, der im eingeschalteten Zustand das Sperrglied 10 gegen den Korb 9a des Differentialgetriebes 9 schiebt. Sowohl das Sperrglied 10 als auch der Korb 9a sind im miteinander zusammenwirkenden Bereich mit Klauen 10a, 9b versehen, die wechselseitig ineinander eingreifen. An Stelle der Klauen können auch entsprechend angeordnete Lamellen treten. Sowohl die Sperrenteile als auch das Differentialgetriebe 9 sind von einem am Achskörper 1 befestigten öldichten Gehäuse 12 umgeben, in welchem Sensoren 13, 14 angeordnet sind, die der Drehzahl des Differentialkorbes 9a und der Achswelle 7 entsprechende Meßwerte $M_1$ bzw. $M_2$ liefern. Der Meßwert $M_2$ ist dabei gleichzeitig ein Maß für die Fahrgeschwindigkeit.

Die Sensoren 13, 14 sind an eine elektronische Schaltung 15 angeschlossen, welche aus den Meßwerten $M_1$ und $M_2$ den Relativschlupf R nach der Beziehung

$$R = \frac{M_2 - M_1}{M_2}$$

errechnet.

Einem der Schaltung 15 zugeordneten Speicher, in dem aus Erfahrung bestimmte Grenzwerte G des Relativschlupfes R in Abhängigkeit von der Fahrgeschwindigkeit abgelegt sind, wird der jeweils gültige Grenzwert G entnommen. Ist der Grenzwert G kleiner als der errechnete Relativschlupf, so wird über ein Verstärker 16 der Magnet 11 erregt und damit das Differentialgetriebe 9 gesperrt.

Wie aus Fig. 2 zu ersehen ist, ist der Grenzwert G im für das Pflügen benützten Arbeitsbereich A, der sich über einen Geschwindigkeitsbereich ab z. B. 4 km/h erstreckt, wie bekannt, konstant. Die Größe des Grenzwertes G ist dabei in Grenzen vom Fahrer des Fahrzeuges verstellbar. Im vorliegenden Ausführungsbeispiel beträgt der Wert G = 0,15.

Im Arbeitsbereich B, der unterhalb des Arbeitsbereiches A liegt, besteht bei gelenkte Räder antreibenden Achswellen die Möglichkeit, daß der vorgegebene Grenzwert G schon allein durch das Einschlagen der Räder 4 überschritten wird, wenn diese einen relativ großen Lenkrollradius L aufweisen. Hier kann es bereits im Stand des Fahrzeuges zu einem Sperren des Differentialgetriebes 9 kommen, wenn ein rascher Lenkeinschlag erfolgt. Da ein rasches Einschlagen der lenkbaren Räder 4 umso stärker zur Geltung gelangt, je niedriger die Fahrgeschwindigkeit v ist, ist im Geschwindigkeitsbereich B der Grenzwert G umgekehrt proportional der jeweiligen Fahrgeschwindigkeit v gestaltet. Wie ersichtlich, steigt der Grenzwert G ausgehend vom Wert G = 0,15 an der Grenze beider Arbeitsbereiche A, B bis auf den Wert G = 1 bei der geringsten von den derzeit verfügbaren Sensoren noch ermittelbaren Geschwindigkeit v. Dieser Grenzwert G wird der Steuerung der Differentialgetriebesperre auch bei noch geringeren Geschwindigkeiten bis praktisch zum Stillstand des Fahrzeuges zu Grunde gelegt.

## Patentansprüche

1. Verfahren zur Steuerung einer Differentialgetriebesperre im Antriebsstrang insbesondere geländegängiger Zugfahrzeuge, wobei das Differentialgetriebe (9) bei Erreichen bzw. Überschreiten eines vorgegebenen Grenzwertes (G) des Relativschlupfes (R) der über das Differentialgetriebe angetriebenen Räder (4) gesperrt wird,

**dadurch gekennzeichnet,**

daß der Grenzwert (G) des Relativschlupfes (R)

in Abhängigkeit von der Fahrgeschwindigkelt (v) bestimmt wird, wobei der Grenzwert (G) in einem ersten, höhere Fahrgeschwindigkeiten (v) erfassenden Geschwindigkeitsbereich (A) niedrige Werte, dagegen in einem zweiten, niedrige Fahrgeschwindigkeiten (v) erfassenden Geschwindigkeitsbereich (B) höhere Werte aufweist.

2. Verfahren nach Anspruch 1,
**dadurch gekennzeichnet,**
daß der Grenzwert (G) im Geschwindigkeitsbereich (A) unabhängig von der Fahrgeschwindigkeit (v) im wesentlichen konstant, dagegen im unterhalb des Geschwindigkeitsbereiches (A) gelegenen Geschwindigkeitsbereich (B) im wesentlichen umgekehrt proportional der Fahrgeschwindigkeit (v) ist.

3. Verfahren nach den Ansprüchen 1 und 2,
**dadurch gekennzeichnet,**
daß die Grenzwerte (G) der Geschwindigkeitsbereiche (A) und (B) eine stetig verlaufende Kurve bilden.

4. Verfahren nach den Ansprüchen 1 bis 3,
**dadurch gekennzeichnet,**
daß der Grenzwert (G) im Geschwindigkeitsbereich (B) abhängig vom Lenkrollradius (L) der Räder (4) einstellbar ist.

## Claims

1. Control method for a differential gearing lock in a driving axle, in particular of off-the-road towing vehicles, in which the differential gearing (9) is locked on reaching or exceeding a specified threshold value (G) of the relative slip of the wheels which are driven via the differential gearing, characterized in that the threshold value (G) of the relative slip (R) is determined in dependence on the driving speed (v), in which respect the threshld value (G) in a first speed range including high driving speeds (v) has lower values, whereas the threshold value in a second speed range including low driving speeds (v) has higher values.

2. Method according to claim 1, characterized in that the threshold value (G) in the speed range (A) independent of the driving speed (v) is substantially constant, whereas in the speed range (B) which is below the speed range (A) it is substantially inversely proportional to the driving speed (v).

3. Method according to claims 1 and 2, characterised in that the threshold values (G) of the speed ranges (A) and (B) form a constant curve.

4. Method according to claims 1 to 3, characterized in that the threshold value (G) in the speed range (B) is adjustable dependent on the steering roll radius (L) of the wheels (4).

## Revendications

1. Procédé pour commander le blocage d'un différentiel sur l'arbre d'entraînement notamment de véhicule de traction tout-terrain, procédé dans lequel le différentiel (9) est bloqué lorsque est atteinte ou bien dépassée une valeur limite prédéfinie (G) du patinage relatif (R) des roues (4) entraînées par l'intermédiaire du différentiel, procédé caractérisé en ce que la valeur limite (G) du patinage relatif (R) est déterminée en fonction de la vitesse de déplacement (v) du véhicule, et que cette valeur limite (G) a des valeurs basses dans une première zone de vitesse (A) englobant des vitesses de déplacement (v) élevées, tandis que par contre elle a des valeurs plus élevées dans une seconde zone de vitesse (B) englobant des vitesses de déplacement (v) réduites.

2. Procédé selon la revendication 1, caractérisé en ce que la valeur limite (G) dans la zone de vitesse (A), est indépendante de la vitesse de déplacement (v) et essentiellement constante, mais que par contre dans la zone de vitesse (B) située en dessous de la zone de vitesse (A) elle est essentiellement inversement proportionnelle à la vitesse de déplacement (v).

3. Procédé selon les revendications 1 et 2, caractérisé en ce que les valeurs limites (G) des zones de vitesse (A) et (B) forment une courbe continue.

4. Procédé selon les revendications 1 à 3, caractérisé en ce que la valeur limite (G) dans la zone de vitesse (B) est susceptible d'être réglée en fonction du déport au sol (L) des roues (4).

Fig. 1

Fig. 2